Europäisches Patentamt

European Patent Office

Office européen des brevets

(11) Veröffentlichungsnummer: **0 261 661 B1**

## EUROPÄISCHE PATENTSCHRIFT

(45) Veröffentlichungstag der Patentschrift: **25.03.92**

(51) Int. Cl.⁵: **B60J 1/02**

(21) Anmeldenummer: **87113909.3**

(22) Anmeldetag: **23.09.87**

(54) **Kraftfahrzeugscheibe.**

(30) Priorität: **24.09.86 DE 3632472**

(43) Veröffentlichungstag der Anmeldung:
**30.03.88 Patentblatt 88/13**

(45) Bekanntmachung des Hinweises auf die
Patenterteilung:
**25.03.92 Patentblatt 92/13**

(84) Benannte Vertragsstaaten:
**AT BE FR GB IT SE**

(56) Entgegenhaltungen:
| | |
|---|---|
| DE-A- 1 923 311 | DE-A- 2 247 644 |
| DE-A- 3 521 115 | DE-T- 3 590 207 |
| FR-A- 1 459 260 | FR-A- 1 465 492 |
| US-A- 2 379 194 | US-A- 2 572 947 |

(73) Patentinhaber: **FLACHGLAS AKTIENGESELL-
SCHAFT
Otto-Seeling-Promenade 10-14
W-8510 Fürth(DE)**

(72) Erfinder: **von Reis, Wolf
Steeler Strasse 34
W-4650 Gelsenkirchen(DE)**
Erfinder: **Derner, Paul, Dr.
Schlüterstrasse 3
W-4650 Gelsenkirchen(DE)**
Erfinder: **Ouenett, Rudolf, Dr.
Wittener Strasse 35
W-4650 Gelsenkirchen(DE)**
Erfinder: **Armbruster, Günter
Horstdyk 8 B
W-4150 Krefeld 1(DE)**

(74) Vertreter: **Goddar, Heinz J., Dr. et al
FORRESTER & BOEHMERT Franz-
Joseph-Strasse 38
W-8000 München 40(DE)**

## Beschreibung

Die Erfindung betrifft eine Kraftfahrzeugscheibe nach der Einleitung der Patentansprüche 1 oder 2.

Mit der fortschreitenden Entwicklung der Kraftfahrzeuge ist auch die Sicherheit für die Fahrzeuginsassen fortschreitend verbessert worden. Hierzu gehört es auch, daß von den einfachen Fensterglasscheiben der ersten Automobile über die Entwicklung des thermisch vorgespannten Glases und die neuere Entwicklung der Verbundsicherheitsgläser das Verletzungsrisiko für die Fahrzeuginsassen laufend verringert wurde. Bei den beiden letztgenannten Glassorten besteht aber immer noch bei direktem Kontakt zwischen den Fahrzeuginsassen und der Glasscheibe ein gewisses Risiko von Schnittverletzungen. Aus diesem Grunde geht die neuere Entwicklung dahin, in verschiedenen Ausgestaltungen Kraftfahrzeugscheiben zu konstruieren, die auf der Innenseite der Silikatglasscheibe oder des Verbundes aus Silikatglasscheiben eine Beschichtung aus ein- oder mehrlagigem Kunststoffmaterial aufweisen, die das Risiko von Schnittverletzungen vermeiden soll. Eine dieser Entwicklungen hat beispielsweise dazu geführt, auf der dem Fahrzeuginneren im Einbauzustand zugewandten Seite der Glasscheibe eine dünne Polyesterfolie anzubringen, die mit Hilfe einer Polyvinylbutyralfolie mit der Glasscheibe verbunden ist. Die Polyesterfolie ist durch das Aufbringen von Methylsiloxan abriebfest beschichtet. Diese Konstruktion hat jedoch wesentliche Nachteile, da die kratzfest beschichtete Polyesterfolie mit den bei der Fahrzeugverglasung üblichen Einbaumitteln nicht ausreichend fest mit der Fahrzeugkarosserie verbunden werden kann, so daß die Vorteile der Verbundsicherheitsglasscheibe verlorengehen, bei der nämlich das Verbundmaterial beim Aufschlagen z. B. des Kopfes eines Fahrzeuginsassens auf die Scheibe diesen elastisch abbremst, so daß eine übermäßige Beschleunigung auf den Schädel und die damit verbundene Gesundheitsgefährdung weitgehend vermieden werden. Durch die mangelnde Haftung in den Einbaumitteln löst sich die Verbundschicht nämlich in diesem Fall automatisch aus dem Fahrzeug. Der Fahrzeuginsasse wird daher nicht abgefangen, sondern drückt die Kraftfahrzeugscheibe durch seine Energie aus der Karosserie, woraus ein erhöhtes Risiko für die Fahrzeuginsassen resultiert.

Aus der DE-A-3 521 115 ist bereits eine Kraftfahrzeugscheibe der gattungsgemäßen Art bekannt, bei der die Verbundfolie und die vorzugsweise ebenfalls kratzfest beschichtete Splitterschutzfolie aus Polyester im wesentlichen in ihren Umfangsbegrenzungen mit der Umfangsbegrenzung der Glasscheibe fluchten, wobei die Rahmendichtung aus Polyurethan direkt angeformt ist. Hierbei wird jedoch die Verbindung mit der Rahmendichtung allein durch die Haftung zwischen dem Polyurethan und der Glasscheibe bzw. der Splitterschutzfolie hergestellt. Diese Konstruktion ist sicherlich geeignet, das Abgehen von Splittern von den Glasscheiben zu verhindern, kann aber nicht im Falle des Aufpralls eines Körpers das Herausreißen der Scheibe bzw. der Splitterschutzfolie aus dem Rahmen verhindern, da die hierbei auftretenden Kräfte von dieser Konstruktion nicht übernommen werden können. Auch diese Kraftfahrzeugscheibe hat daher den Nachteil, daß die vorstehend beschriebenen Vorteile herkömmlicher Verbundsicherheitsglasscheiben verlorengehen, insoweit nämlich, als die elastisch deformierbare Verbundfolie nicht mehr dazu dienen kann, beim Auftreffen eines Fahrzeuginsassens auf die Scheibe diesen elastisch abzubremsen. Um die Aufprallenergie der Fahrzeuginsassen bei einem Unfall nach Art eines Sprungtuchs zuverlässig abbauen zu können, ist es notwendig, daß die Kunststoffbeschichtung randseitig fest mit der Karosserie verbunden ist, wie dies bei Selbstausheilschichten auf Polyurethanbasis bekannt und auch nicht problematisch ist, weil die üblichen Polyurethan-Einbaukleber mit derartigen Schichten kompatibel sind, der Kleber also gut auf der Kunststoffschicht haftet, während bei den harten Kratzfestschichten mit dem Aufbau der gattungsgemäßen Kraftfahrzeugscheibe weder, beim Anformen, das Material der Rahmendichtung noch, im Falle der Verklebung, übliche Kleber hinreichend gut auf der Polyesterfolie, zumal der oberflächlich gehärteten Polyesterfolie, haften.

Aus der DE-T-3 590 207 ist eine Kraftfahrzeugscheibe ähnlicher Art und mit ähnlichen Nachteilen bekannt, wie sie in der DE-A-3 521 115 beschrieben und vorstehend diskutiert worden ist. Aus der US-A-2 379 194 ist andererseits eine Methode bekannt, mit der Verbundgläser bei Flugzeugen so eingebaut werden können, daß die Druckkräfte, die in den Druckkabinen in großer Höhe fliegender Flugzeuge auftreten, abgefangen werden können. Dabei wird die Kunststoffolie über den Rand der Silikatglasscheiben hinaus stehengelassen. Der überstehende Bereich der Folie wir dazu benutzt, eine dichte Verbindung in der Außenhaut des Flugzeuges herzustellen. Dabei soll die Schwierigkeit vermieden werden, auf einer dicken, aufgrund der fertigungstechnischen bedingten Toleranzen relativ unregelmäßigen Glasscheibe eine hinreichend dichte Preßdichtung durchführen zu müssen. Aufgrund der zähelastischen Eigenschaften der Folie wird dabei die Belastung, die senkrecht auf die Folie einwirkt, mit Hilfe von zusätzlichen Einlegeteilen in eine Scherbelastung der Folie umgewandelt, wobei die Eigenschaft der Folie, auf Scherung hochbelastbar zu sein, ausgenutzt wird. Um zu verhindern, daß die nur über die thermoplastische Zwischenschicht in die Außenhaut des Flugzeuges eingebettete Glasscheibe unter dem statischen Druck im Flugzeuginneren in großer Höhe nach außen aus dem Flugzeug hinausgedrückt wird, ist dabei vorgesehen, ein verstärkendes Element in den Bereich der überstehenden Folie einzulegen, so daß also eine Fixierung der Glasscheiben parallel zur Außenhaut des Flugzeuges sichergestellt ist. Aus der DE-A-2 247 644 ist eine Kraftfahrzeugscheibe bekannt, bei der die Scheibeneinheit mit dem Rahmen verklebt ist, der dabei sowohl die Glasscheibe als auch eine aufgebrachte Kunststoffschicht umgreifen kann, jedoch ist dabei das Problem einer hinreichenden Energieübertragung aus einer plastisch verformbaren Verbundfolie auf die Fahrzeugkarosserie im Falle schlecht mit dem Kleber bzw. dem Rahmenmaterial haftender Kunststoffmaterialien nicht gelöst. Schließlich zeigt die US-A-2 572 947 einen Verbundscheibenaufbau, bei dem eine zwischen zwei Glasscheiben angeordnete Kunststoffolie mit aus der Scheibenebene vorstehenden Ansätzen versehen ist, welche die Scheibeneinheit zuverlässig im Rahmen sichern sollen, insbesondere zur Verwendung bei Flugzeugfenstern, wobei die dort vorgesehenen Ansätze jedoch eine verhältnismäßig dicke Scheibenkonstruktion erforderlich machen, die einen Einsatz bei Kraftfahrzeugen moderner Konstruktion verhindern.

Der Erfindung liegt daher die Aufgabe zugrunde, eine Kraftfahrzeugscheibe der gattungsgemäßen Art zu schaffen, bei der die Verbindung der Glasscheibe bzw. der Verbund- und/oder der Splitterschutzfolie mit der Rahmendichtung so ausgebildet ist, daß nicht nur die Funktion der Splitterschutzschicht, sondern auch die Rückhaltefunktion der plastisch verformbaren Verbundschicht sichergestellt und eine hinreichend kraftschlüssige Verbindung zwischen der plastisch deformierbaren Verbundschicht und der Fahrzeugkarosserie gewährleistet sind.

Erfindungsgemäß wird diese Aufgabe durch die im Kennzeichen der Patentansprüche 1 und/oder 2 genannten Merkmale gelöst. Besondere Ausführungsformen der Erfindung sind Gegenstand der Unteransprüche.

Der Erfindung liegt die überraschende Erkenntnis zugrunde, daß die gestellte Aufgabe dadurch gelöst werden kann, daß mindestens die plastisch deformierbare Verbundschicht bzw. Verbundfolie mit dem angeformten Rahmen so verbunden ist, daß sie auf diesen Zugkräfte übertragen kann. Hierzu kann die Verbundfolie beispielsweise über den Rand der Silikatglasscheibe in der beanspruchten Weise hinausragen. Die zur beschriebenen Kraftübertragung befähigende Verbindung zwischen der Verbundfolie und der Rahmendichtung kann durch Formschluß, durch Adhäsion oder durch Kombination aus beidem erzielt werden.

Prinzipiell ist auch denkbar, daß der Kraftschluß durch ein Verkleinern der nicht haftenden Splitterschutzfolie in der Weise, daß die Verbundfolie am Rand frei liegt, realisiert wird. In jedem Fall ist sichergestellt, daß beim Auftreffen z. B. des Kopfes von Fahrzeuginsassen im Falle eines Unfalls über die plastisch deformierbare, fest über die Rahmendichtung mit der Fahrzeugkarosserie verbundene Verbundfolie ein erheblicher Teil der Aufprallenergie aufgefangen und abgeleitet bzw. vernichtet wird.

Nachstehend sind Ausführunggsbeispiele der Erfindung anhand der schematischen Zeichnung im einzelnen erläutert. Dabei zeigt:

Fig. 1 ein erstes Ausführungsbeispiel des Randbereiches einer Kraftfahrzeugscheibe nach der Erfindung im Schnitt senkrecht zur Scheibenebene;

Fig. 2 ein zweites Ausführungsbeispiel in Figur 1 entsprechender Darstellung;

Fig. 3 ein drittes Ausführungsbeispiel in Figur 1 und 2 entsprechender Darstellung;

Fig. 4 ein viertes Ausführungsbeispiel in Figur 1 bis 3 entsprechender Darstellung;

Fig. 5 ein fünftes Ausführungsbeispiel in Figur 1 bis 4 entsprechender Darstellung;

Fig. 6 ein sechstes Ausführungsbeispiel in Figur 1 bis 5 entsprechender Darstellung;

Fig. 7 ein siebtes Ausführungsbeispiel in Figur 1 bis 6 entsprechender Darstellung;

Fig. 8 ein achtes Ausführungsbeispiel in Figur 1 bis 7 entsprechender Darstellung;

Fig. 9 ein neuntes Ausführungsbeispiel in Figur 1 bis 8 entsprechender Darstellung;

Fig. 10 ein zehntes Ausführungsbeispiel in Figur 1 bis 9 entsprechender Darstellung;

Fig. 11 ein elftes Ausführungsbeispiel in Figur 1 bis 10 entsprechender Darstellung; und

Fig. 12 ein zwölftes Ausführungsbeispiel in Figur 1 bis 11 entsprechender Darstellung.

Bei allen Ausführungsbeispielen gemäß der Zeichnung weist die Kraftfahrzeugscheibe nach der Erfindung eine Glasscheibe 10, die in der Praxis aus einer Einfach-Silikatglasscheibe oder auch einer Verbundsicherheitsglasscheibe mit Silikatglas-Deckscheiben bestehen kann, eine damit verklebte Verbundfolie 12 aus Polyvinylbutyral sowie eine wiederum damit verklebte Polyesterfolie 14 auf, die an ihrer der Verbundfolie 12 abgewandten Seite vorzugsweise kratzfest beschichtet ist. Eine Rahmendichtung 16, in situ angeformt aus Polyurethan, umfaßt kraftschlüssig den Scheibenrand.

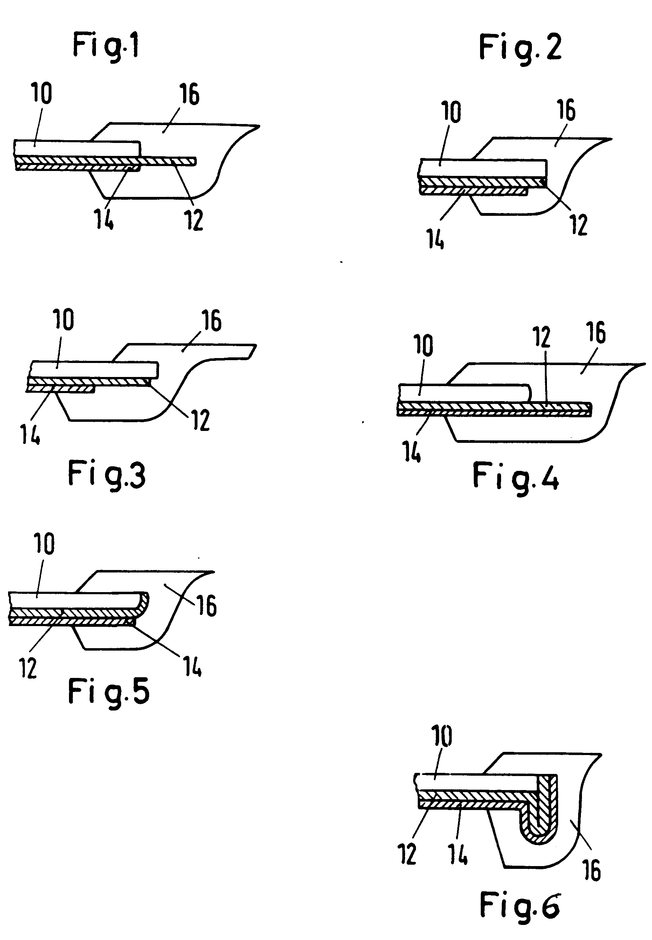

Beim Ausführungsbeispiel gemäß Figur 1 steht die Verbundfolie 12 in ausreichender Breite von mindestens 2 cm, beim gezeigten Ausführungsbeispiel 2,8 cm, über den Rand der Glasscheibe 10 vor. Der direkt angespritzte Rahmen in Form der Rahmendichtung 16 aus Polyurethan - auch PVC oder andere Thermoplaste sind ggf. geeignet - umgibt den Rand sowohl der Glasscheibe 10 als auch der Verbundfolie 12 als auch der Splitterschutzfolie 14. Die äußere Kontur der Rahmendichtung 16 kann den Designwünschen und der Einbausituation für das jeweilige Fahrzeug angepaßt werden. Infolge des Überstehens der Verbundfolie 12 über die Umfangsbegrenzung der Glasscheibe 10 ist eine relativ breite Rahmendichtung 16 von etwa 2,5 cm bis 3 cm Breite über die Glaskontur hinaus erforderlich. Die Kraftschlußverbindung ist bei diesem Ausführungsbeispiel dadurch gewährleistet, daß beide Seitenflächen des über die Umfangskontur der Glasscheibe 10 und der Splitterschutzfolie 14 vorstehendes Randes der Verbundfolie 12 mit dem Material der Rahmendichtung 16 in Adhäsionskontakt stehen.

Beim Ausführungsbeispiel von Figur 2 fluchtet die Umfangsbegrenzung der Verbundfolie 12 im wesentlichen mit derjenigen der Glasscheibe 10, wobei die Splitterschutzfolie 14 jedoch abgesetzt ausgebildet ist. Hierbei wird die verbesserte Kraftschlußwirkung durch den direkten Kontakt zwischen dem Material der Rahmendichtung 16 und dem freigelassenen Randbereich der Verbundfolie 12, hervorgerufen durch die flächenmäßig kleinere Ausbildung der Splitterschutzfolie 14, bewirkt. Da hier kein Überstand der Verbundfolie 12 über die Außenkontur der Glasscheibe 10 vorgesehen ist, kann die Rahmendichtung 16 die Glasscheibe 10 wesentlich enger umschließen als bei dem Ausführungsbeispiel von Figur 1. Ungünstiger ist hierbei allerdings, daß die Haftung zwischen der Verbundfolie 12 und der Rahmendichtung 16 nicht so gut ist wie im Ausführungsbeispiel von Figur 1, infolge der kleineren Adhäsionskontaktfläche, mit dem weiteren Problem, daß die Splitterschutzfolie 14 vor dem Aufbringen auf die mit der Verbundfolie 12 versehene Glasscheibe 10 sehr genau in ihrer Kontur zugeschnitten werden muß.

Das Ausführungsbeispiel von Figur 3 ähnelt demjenigen von Figur 2, wobei hier durch das weitere Zurücksetzen der Umfangsbegrenzung der Splitterschutzfolie 14 eine vergrößerte Kontaktfläche zwischen dem Material der Rahmendichtung 16 und der Verbundfolie 12 geschaffen worden ist. Letztere ist hier ebenfalls gegenüber der Umfangskontur der Glasscheibe 10 abgesetzt, um auf diese Weise Zuschneidprobleme weitgehend vermeiden zu können.

Bei dem in Figur 4 gezeigten Ausführungsbeispiel der Erfindung sind sowohl die Verbundfolie 12 als auch die Splitterschutzfolie 14 über die Umfangskontur der Glasscheibe 10 vergrößert, mit ähnlicher, wenn nicht ganz so günstiger Wirkung bezüglich des Formschlusses wie beim Ausführungsbeispiel von Figur 1. Der Zuschnitt ist jedoch hierbei einfacher als beim letztgenannten Ausführungsbeispiel.

Figur 5 zeigt ein Ausführungsbeispiel, bei dem die Splitterschutzfolie 14 im wesentlichen dieselben Abmessungen hat wie die Glasscheibe 10, während, in Abwandlung gegenüber dem Ausführungsbeispiel von Figur 1, die Verbundfolie 12 um den Rand der Glasscheibe 10 herumgeschlagen ist. Fertigungstechnisch hat dies den Vorteil, daß die Verbundfolie 12 nicht breit über den Rand der Glasscheibe 10 hinaus vorstehen muß, sondern daß sich die Scheibeneinheit ähnlich wie bisher im Verbundprozeß bewegen läßt. Die Rahmendichtung 16, die den Kraftschluß mit der Fahrzeugkarosserie ermöglichen soll, wird dabei in ähnlicher Weise angeformt wie beim Ausführungsbeispiel von Figur 1, kann jedoch hierbei sehr viel schmäler ausfallen. Ein Überstand der Verbundfolie 12 in einer Breit von ca. 5 bis 10 mm um die Umfangskontur der Glasscheibe 10 ist ausreichend. Die äußere Form kann auch hier den Einbauerfordernissen im Fahrzeug bzw. den Designwünschen weitestgehend angepaßt werden.

Das Ausführungsbeispiel gemäß Figur 6 unterscheidet sich dadurch, daß durch die hierbei realisierte Randverdickung noch ein Formschluß mit der Rahmendichtung 16 bewirkt ist, der aus der Zeichnung ohne weiteres ersichtlich ist. Nachteilig ist hierbei allerdings der erforderliche relativ hohe Aufbau der Rahmendichtung 16 mit einer Bauhöhe in der Größenordnung von 17 bis 20 mm.

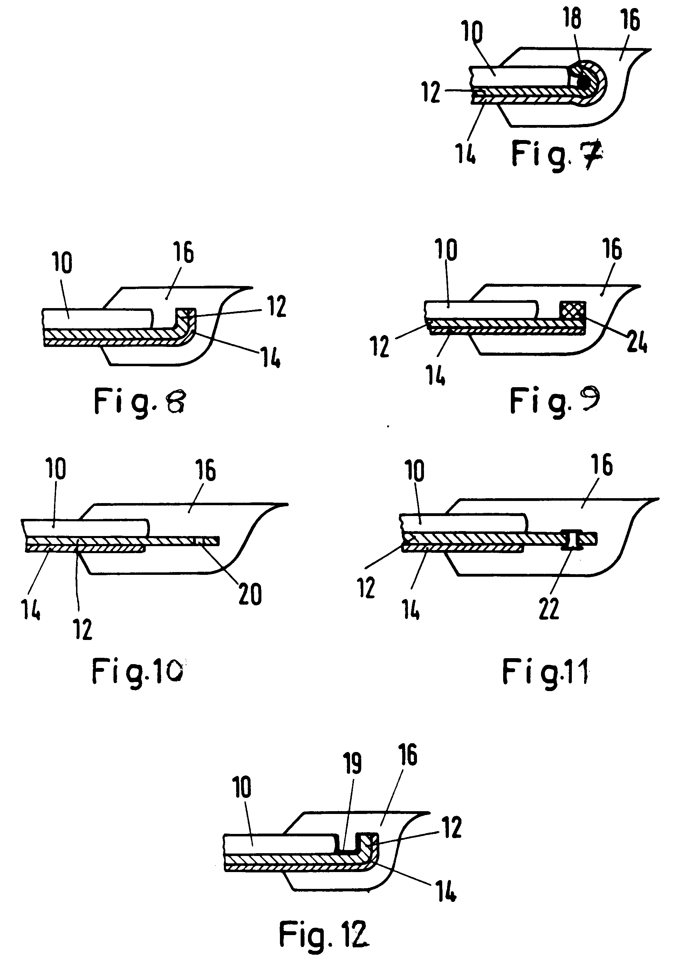

Beim Ausführungsbeispiel von Figur 7 ist wiederum, wie beim Ausführungsbeispiel von Figur 6, durch entsprechende Randverdickung eine Formschlußverbindung gewährleistet.

Figur 8 zeigt ein Ausführungsbeispiel, bei dem die Verbundfolie 12 und die Splitterschutzfolie 14 im Abstand vom Umfangsrand der Glasscheibe 10 aus der Scheibenebene hochgeknickt sind, wodurch in der ohne weiteres aus der Zeichnung ersichtlichen Weise durch das Material der Rahmendichtung 16 eine wirksame Formschlußverbindung erzielt wird.

Figur 9 zeigt ein Ausführungsbeispiel, bei dem in ähnlicher Weise wie in Figur 11 eine Formschlußverbindung zwischen der Verbundfolie 12 und der Splitterschutzfolie 14 einerseits sowie der Glasscheibe 10 gewährleistet ist, jedoch nicht dadurch, daß ein Hochknicken der Endbereiche der Verbundfolie 12 und/oder der Splitterschutzfolie 14 aus der Scheibenebene mit Abstand vom Umfangsrand der Glasscheibe 10 vorgesehen wären, wie dies bei Figur 11 der Fall ist, sondern indem auf die Verbundfolie 12 im Abstand vom Umfangsrand der Glasscheibe 10 ein Auflageteil 24 aufgeklebt ist. Die Einspannwirkung wird hierbei also durch die Adhäsion der Verbundfolie 12 gegenüber dem Auflageteil 24 bewirkt, welches seinerseits den genannten Formschluß mit der Rahmendichtung 16 herstellt.

Beim Ausführungsbeispiel nach Figur 10, welches eine Abwandlung des Ausführungsbeispieles gemäß Figur 1 darstellt, sind in den überstehenden Rand der Verbundfolie 12 im Bereich des Überstandes in regelmäßigen Abständen Randlöcher 20 eingestanzt, die beim Anspritzen der Rahmendichtung 16 im Überstand einen Formschluß mit der Verbundfolie 12 erlauben, so daß letztere fest in der Rahmendichtung 16 eingespannt ist. Hierzu ist ebenfalls ein etwas breiterer Rahmen, ähnlich wie im Ausführungsbeispiel von Figur 1, erforderlich.

Das Ausführungsbeispiel gemäß Figur 11 unterscheidet sich von demjenigen gemäß Figur 10 dadurch, daß dabei in die Randlöcher, nicht gesondert gezeigt, Hohlnieten 22 eingesetzt sind, wodurch es möglich ist, die Kerbwirkung der Formschlußverbindung gegenüber dem Ausführungsbeispiel von Figur 10 zu verringern. Hierdurch wird eine höhere Festigkeit bei Belastung der Verbundfolie 12 erreicht. Natürlich könnte sowohl beim Ausführungsbeispiel von Figur 10 als auch beim Ausführungsbeispiel von Figur 11 vorgesehen sein, daß, wie beim Ausführungsbeispiel gemäß Figur 4, nicht nur die Verbundfolie 12, sondern auch die Splitterschutzfolie 14 entsprechend weit über den Umfangsrand der Glasscheibe 10 vorstehen, wobei dann die Randlöcher 20 sowohl die Verbundfolie 12 als auch die damit verbundene Splitterschutzfolie 14 durchsetzen würden. Insbesondere hierbei ergibt sich dann eine besonders hohe Einspannwirkung, da auch die Splitterschutzfolie 14 kraft- und formschlüssig mit der Rahmendichtung 16 verbunden ist.

Bei dem Ausführungsbeispiel von Figur 12 schließlich ist, in Abwandlung des Ausführungsbeispiels von Figur 11, zwischen die Glasscheibe 10 und den aus der Scheibenebene hochgebogenen Endbereich der Verbundfolie 12 und der Splitterschutzfolie 14 ein U-Profil 19 aus Hartkunststoff eingesetzt, dessen einer Schenkel an der Umfangsfläche der Glasscheibe 10, dessen anderer Schenkel an dem hochgebogenen Endbereich der Verbundfolie 12 und dessen Steg an dem ebenen Bereich der Verbundfolie 12 anliegt. Das U-Profil 19 dient sowohl als Versteifungselement als auch als Abstandhalter und Formschlußhilfe, wobei ein Einbau eines derartigen U-Profiles natürlich auch bei der Ausführungsform gemäß Figur 9 möglich wäre.

Bei allen beschriebenen Ausführungsbeispielen kann, wie insgesamt bei Anwendung des Erfindungsgedankens, auch mindestens eine der Silikatglasscheiben durch eine Kunststoffscheibe, beispielsweise aus Polycarbonat oder PMMA, ersetzt sein, auch wenn in diesem Fall die Splitterneigung und die Verletzungsgefahr nicht so groß sind wie bei der Verwendung von Silikatglasscheiben. Anstelle von Polyvinylbutyral als Verbundfolienmaterial kann beispielsweise auch Polyurethan verwendet werden. Es ist auch denkbar, die kraftschlüssige Verbindung der Verbundfolie mit der Rahmendichtung nur abschnittsweise vorzunehmen, beispielsweise lediglich entlang der Seitenkanten oder der Ober- und/oder Unterkanten der Kraftfahrzeugscheibe.

**Patentansprüche**

1. Kraftfahrzeugscheibe, mit einer Glasscheibe, die aus einer Silikatgas-Einfachscheibe (10) oder einem Verbund mit Silikatglas-Deckscheiben besteht und an deren im Einbauzustand zum Fahrzeuginneren weisenden Seite aufeinanderfolgend eine plastisch deformierbare Verbundfolie (12) aus Polyvinylbutyral oder dergleichen und eine daran anschließende, vorzugsweise an ihrer der Verbundfolie abgewandten Seite mit einer kratzfesten Beschichtung versehene Splitterschutzfolie (14) aus Polyester oder dergleichen angeordnet sind, und einer sich um den Umfangsrand der über die Verbundfolie (12) mit der Splitterschutzfolie (14) verklebten Glasscheibe (10) erstreckenden, deren schmale Umfangsflächen ebenso wie einen umfangsrandnahen Bereich der Seitenflächen einerseits der Glasscheibe (10) und andererseits der Splitterschutzfolie (14) umfassenden, in situ angegossenen, angespritzten, angeformten und/oder verklebten Rahmendichtung aus Kunststoffmaterial, wie Polyurethan oder dergleichen, dadurch gekennzeichnet, daß mindestens eine der Seitenflächen der Verbundfolie (12) bereichsweise mit der Rahmendichtung (16) unmittelbar kraftschlüssig verklebt ist.

2. Kraftfahrzeugscheibe, mit einer Glasscheibe, die aus einer Silikatgas-Einfachscheibe (10) oder einem Verbund mit Silikatglas-Deckscheiben besteht und an deren im Einbauzustand zum Fahrzeuginneren weisenden Seite aufeinanderfolgend eine plastisch deformierbare Verbundfolie (12) aus Polyvinylbutyral oder dergleichen und eine daran anschließende, vorzugsweise an ihrer der Verbundfolie abgewandten Seite mit einer kratzfesten Beschichtung versehene Splitterschutzfolie (14) aus Polyester oder dergleichen angeordnet sind, und einer sich um den Umfangsrand der über die Verbundfolie (12) mit der Splitterschutzfolie (14) verklebten Glasscheibe (16) erstreckenden, deren schmale Umfangsflächen ebenso wie einen umfangsrandnahen Bereich der Seitenflächen einerseits der Glasscheibe (10) und andererseits der Splitterschutzfolie (14) umfassenden, in situ angegossenen, angespritzten, angeformten und/oder verklebten Rahmendichtung aus Kunststoffmaterial, wie Polyurethan oder dergleichen, insbesondere nach Anspruch 1, dadurch gekennzeichnet, daß die Verbundfolie (12) mit der Rahmendichtung (16) formschlüssig verbunden ist.

3. Kraftfahrzeugscheibe nach Anspruch 1 oder 2, dadurch gekennzeichnet, daß die Verbundfolie (12) sich in der Scheibenebene über die Umfangsbegrenzung der Glasscheibe (10) hinaus erstreckt.

4. Kraftfahrzeugscheibe nach Anspruch 3, dadurch gekennzeichnet, daß die Verbundfolie (12) sich in der Scheibenebene über die Umfangsbegrenzung der Splitterschutzfolie (14) hinaus erstreckt.

5. Kraftfahrzeugscheibe nach Anspruch 3, dadurch gekennzeichnet, daß die Umfangsbegrenzung der Verbundfolie (12) mit derjenigen der Splitterschutzfolie (10) im wesentlichen fluchtet.

6. Kraftfahrzeugscheibe nach einem der Ansprüche 3 bis 5, dadurch gekennzeichnet, daß der über die Umfangsbegrenzung der Glasscheibe (10) vorstehende Rand der Verbundfolie (12) und ggf. der Splitterschutzfolie (14) mit einer Formschlußhilfe (19, 20, 22, 24) versehen ist.

7. Kraftfahrzeugscheibe nach Anspruch 6, dadurch gekennzeichnet, daß die Formschlußhilfe eine Vielzahl von Randlöchern (20) aufweist.

8. Kraftfahrzeugscheibe nach Anspruch 7, dadurch gekennzeichnet, daß in die Randlöcher (20) Hohlnieten oder dergleichen eingesetzt sind.

9. Kraftfahrzeugscheibe nach einem der Ansprüche 6 bis 8, dadurch gekennzeichnet, daß die Formschlußhilfe einen aus der Folienebene abgeknickten Endbereich der Verbundfolie (12) und ggf. der Splitterschutzfolie (14) mit Abstand vom Umfangsrand der Glasscheibe (10) umfaßt.

10. Kraftfahrzeugscheibe nach einem der Ansprüche 6 bis 9, dadurch gekennzeichnet, daß die Formschlußhilfe ein mit der Verbundfolie (12) im Abstand vom Umfangsrand der Glasscheibe (10) verklebtes Auflageteil (24) umfaßt.

11. Kraftfahrzeugscheibe nach Anspruch 9 oder 10, dadurch gekennzeichnet, daß die Formschlußhilfe ein mit einem Schenkel an der Umfangsfläche der Glasscheibe (10), mit dem anderen Schenkel an den abgeknickten Endbereich der Verbundfolie (12) bzw. dem Auflageteil (24) und mit seinem Steg an dem über die Umfangsbegrenzung der Glasscheibe (10) parallel zu deren Ebene sich erstreckenden Bereich der Verbundfolie (12) anliegendes U-Profil aus steifem Material, wie Metall, Kunststoff oder dergleichen, aufweist.

12. Kraftfahrzeugscheibe nach Anspruch 1 oder 2, dadurch gekennzeichnet, daß die Verbundfolie (12) um die Umfangsfläche der Glasscheibe (10) zumindest bis zum Fluchten mit der der Splitterschutzfolie (14) abgewandten Seitenfläche derselben herumgezogen und mit dieser verklebt ist.

13. Kraftfahrzeugscheibe nach Anspruch 12, dadurch gekennzeichnet, daß die Verbundfolie (12) nahe der Umfangsfläche der Glasscheibe (10) rückgefaltet und mit sich selbst derart verklebt ist, daß durch die Rückfaltung der Verbundfolie (12) eine Formschluß mit der Rahmendichtung (16) bewirkende Randverdikkung geschaffen ist.

14. Kraftfahrzeugscheibe nach Anspruch 13, dadurch gekennzeichnet, daß die Verbundfolie (12) um ein Einlegeteil (18) gefaltet ist.

15. Kraftfahrzeugscheibe nach Anspruch 14, dadurch gekennzeichnet, daß das Einlegeteil (18) mit der Umfangsfläche der Glasscheibe (10) verklebt ist.

16. Kraftfahrzeugscheibe nach Anspruch 1, dadurch gekennzeichnet, daß die Umfangsbegrenzung der Verbundfolie (12) im wesentlichen mit derjenigen der Glasscheibe (10) fluchtet oder innerhalb dieser liegt; daß die Splitterschutzfolie (14) mit Abstand innerhalb der Umfangsbegrenzung der Verbundfolie (12) endet; und daß letztere mit der Rahmendichtung (16) in Adhäsionskontakt steht.

## Claims

1. A motor vehicle glazing unit comprising a glass pane which consists of a single silicate glass pane (10) or of a laminate having silicate glass outer panes and which has disposed, in consecutive relationship on the side which, with the pane fitted, is near the vehicle interior, a plastically deformable laminating foil (12) of polyvinylbutyral or the like, then an anti-shatter foil (14) which is made of polyester or the like and which preferably has a scratch-proof coating on the side remote from the laminating foil, there also being provided a plastics frame seal of polyurethane or the like which extends around the peripheral edge of the glass pane (10) stuck with the interposition of the laminating foil (12) to the anti-shatter foil (14), around the narrow peripheral surfaces of the pane (10) and around a zone of the side surfaces near the respective peripheral edges of the glass pane (10) and the anti-shatter foil (14) and which is produced in situ by being cast or injection-moulded or formed and/or stuck on, characterised in that at least one of the side surfaces of the laminating foil (12) is operatively stuck directly to the frame seal (16) in zones.

2. A motor vehicle glazing unit comprising a glass pane which consists of a single silicate glass pane (10) or of a laminate having silicate glass outer panes and which has disposed, in consecutive relationship on the side which, with the pane fitted, is near the vehicle interior, a plastically deformable laminating foil (12) of polyvinylbutyral or the like, then an anti-shatter foil (14) which is made of polyester or the like and which preferably has a scratch-proof coating on the side remote from the laminating foil, there also being provided a plastics frame seal of polyurethane or the like which extends around the peripheral edge of the glass pane (10) stuck with the interposition of the laminating foil (12) to the anti-shatter foil (14), around the narrow peripheral surfaces of the pane (10) and around a zone of the side surfaces near the respective peripheral edges of the glass pane (10) and the anti-shatter foil (14) and which is produced in situ by being cast or injection-moulded or formed and/or stuck on, characterised in that the laminating foil (12) is positively connected to the frame seal (16).

3. A glazing unit according to claim 1 or 2, characterised in that the laminating foil (12) extends in the plane of the glazing unit beyond the peripheral boundary of the glass pane (10).

4. A glazing unit according to claim 3, characterised in that the laminating foil (12) extends in the plane of the glazing unit beyond the peripheral boundary of the anti-shatter foil (14).

5. A glazing unit according to claim 3, characterised in that the peripheral boundary of the laminating foil (120 is substantially in registration with the peripheral boundary of the anti-shatter foil (10).

6. A glazing unit according to any of claims 3 to 5, characterised in that that edge of the laminating foil (12) and possibly of the anti-shatter foil (14) which projects beyond the peripheral boundary of the glass pane (10) has an acid (19, 20, 22, 24) to positive engagement.

7. A glazing unit according to claim 6, characterised in that the aid to positive engagement comprises a number of edge apertures (20).

8. A glazing unit according to claim 7, characterised in that hollow rivets or the like are introduced into the edge apertures (20).

9. A glazing unit according to any of claims 6 to 8, characterised in that the aid comprises an end zone of the laminating foil (12) and possibly of the anti-shatter foil (14), such zone being bent out of the foil plane and being at a distance from the peripheral edge of the glass pane (10).

10. A glazing unit according to any of claims 6 to 9, characterised in that the aid comprises a support part (24) stuck to the laminating foil (12) at a distance from the peripheral edge if the glass pane (10).

11. A glazing unit according to claim 9 or 10, characterised in that the aid has a channel section made of a rigid material, such as metal or plastics or the like, one arm of the channel section engaging the peripheral surface of the glass pane (10), the other arm of the channel section engaging the bent-away end zone of the laminating foil (12) or support part (24) and the web (12) of the channel section engaging that zone of the laminating foil (12) which extends beyond the peripheral boundary of the glass pane (10) parallel to the plane thereof.

12. A glazing unit according to claim 1 or 2, characterised in that the laminating foil (12) is drawn around the peripheral surface of the glass pane (10) at least until it is in alignment with the pane side surface remote from the anti-shatter foil (14) and is stuck to the latter surface.

13. A glazing unit according to claim 12, characterised in that the laminating foil (12) is folded back near the peripheral surface of the glass pane (10) and so stuck to itself that the folding-back of the laminating foil (12) provides an edge thickening producing a positive connection to the frame seal (16).

14. A glazing unit according to claim 13, characterised in that the laminating foil (12) is folded around an insert (18).

15. A glazing unit according to claim 14, characterised in that the insert (18) is stuck to the peripheral surface of the glass pane (10).

16. A glazing unit according to claim 1, characterised in that the peripheral boundary of the laminating foil (12) is substantially in alignment with or is inside the peripheral boundary of the glass pane (10), the anti-shatter foil (14) terminates inside and at a distance from the peripheral boundary of the laminating foil (12) and the same is in adhesive contact with the frame seal (16).

**Revendications**

1. Vitre d'automobile comportant une vitre de verre, constituée par une vitre simple aux silicates (10) ou par un feuilleté avec des plaques de recouvrement en verre aux silicates et sur le côté de laquelle, tourné après montage vers l'intérieur du véhicule, sont disposées l'une après l'autre, une feuille intercalaire (12), en polybutyral de vinyle ou analogue déformable de façon plastique, ensuite une feuille antilacération (14) en polyester ou analogue de préférence munie d'une couche résistante à l'abrasion sur son côté opposé à la feuille intercalaire, et un joint de cadre en matière plastique telle que du polyuréthane ou analogue, coulé, injecté, venu de moulage ou collé in situ, s'étendant sur le bord de la surface de la vitre (10) collé par la feuille intercalaire (12) à la feuille antilacération (14), et entourant les faces étroites de la circonférence ainsi qu'une zone périphérique de la surface de la vitre (10) d'une part et de la feuille antilacération (14) d'autre part, caractérisée en ce que des zones d'au moins une des surfaces de la feuille intercalaire (12) sont collées directement au joint de cadre (16) de manière à constituer une liaison par force.

2. Vitre d'automobile, comportant une vitre de verre, constituée par une vitre simple aux silicates (10) ou par un feuilleté avec des plaques de recouvrement en verre aux silicates et sur le côté de laquelle, tourné après montage vers l'intérieur du véhicule, sont disposées l'une après l'autre, une feuille intercalaire (12), en polybutyral de vinyle ou analogue pouvant être déformée de façon plastique, ensuite une feuille antilacération (14) en polyester ou analogue de préférence munie d'une couche résistante à l'abrasion sur son côté opposé à la feuille intercalaire (12), et un joint de cadre en matière plastique telle que du polyuréthane ou analogue, coulé, injecté, venu de moulage ou collé in situ, s'étendant sur le bord de la surface de la vitre (10) collé par la feuille intercalaire (12) à la feuille antilacération (14), et entourant les faces étroites de la circonférence ainsi qu'une zone périphérique de la surface de la vitre (10), d'une part, et de la feuille antilacération (14), d'autre part, en particulier selon la revendication 1, caractérisée en ce que la feuille intercalaire (12) est liée au joint de cadre (16) de manière à constituer une liaison par forme.

3. Vitre d'automobile selon la revendication 1 ou 2 caractérisée en ce que la feuille intercalaire (12) s'étend dans le plan de la vitre au-delà de la limite de la circonférence de la vitre de verre (10).

4. Vitre d'automobile selon la revendication 3 caractérisée en ce que la feuille intercalaire (12) s'étend sur le plan de la vitre au-delà de la limite de la circonférence de la feuille antilacération (14).

5. Vitre d'automobile selon la revendication 3, caractérisée en ce que la limite de la circonférence de la feuille intercalaire (12) s'aligne pratiquement sur celle de la feuille antilacération (14).

6. Vitre d'automobile selon les revendications 3 à 5, caractérisée en ce que la périphérie de la feuille intercalaire (12) et, le cas échéant, de la feuille antilacération (14) dépassant la limite de la surface de la vitre de verre (10) est munie d'un accessoire de liaison par forme (19, 20, 22, 24).

7. Vitre d'automobile selon la revendication 6 caractérisée en ce que l'accessoire de liaison par forme comporte une multitude de trous périphériques (20).

8. Vitre d'automobile selon la revendication 7, caractérisée en ce que des rivets creux ou analogues sont fixés dans les trous périphériques (20).

9. Vitre d'automobile selon l'une quelconque des revendications 6 à 8 caractérisée en ce que l'accessoire de liaison par forme entoure à une certaine distance du bord périphérique de la vitre de verre (10), une extrémité de la feuille intercalaire (12) et, le cas échéant, de la feuille antilacération (14) repliée à partir du plan de la vitre.

10. Vitre d'automobile selon l'une quelconque des revendications 6 à 9 caractérisée en ce que l'accessoire de liaison par forme comprend un rajout (24) collé sur la feuille intercalaire (12) à une certaine distance du bord de la vitre de verre (10).

11. Vitre d'automobile selon l'une quelconque des revendications 9 ou 10, caractérisée en ce que l'accessoire de liaison par forme comporte un profilé en U en matériau rigide, métal, résine ou analogue, dont une jambe est en contact avec le bord de la vitre de verre (10), dont l'autre jambe est en contact avec l'extrémité repliée de la feuille intercalaire (12) ou, respectivement, avec le rajout (24) et dont le dos est en contact avec la zone de la feuille intercalaire (12) s'étendant au-delà de la limite de la surface de la vitre de verre (10) et parallèlement au plan de cette dernière.

12. Vitre d'automobile selon l'une quelconque des revendications 1 ou 2, caractérisée en ce que la feuille intercalaire (12) s'étend autour du bord de la vitre de verre (10) au moins jusqu'à l'alignement avec la surface opposée à la feuille antilacération (14) et est collée sur celle-ci.

13. Vitre d'automobile selon la revendication 12, caractérisée en ce que la feuille intercalaire (12) est repliée à proximité du bord de la vitre de verre (10) et est collée sur elle-même de manière que par le pliage de la feuille intercalaire (12) on crée une surépaisseur de bordure provoquant une laison par forme avec le joint de cadre (16).

14. Vitre d'automobile selon la revendication 13, caractérisée en ce que la feuille intercalaire (12) est rabattue autour d'une pièce d'insertion (18).

15. Vitre d'automobile selon la revendication 14, caractérisée en ce que la pièce d'insertion (18) est collée sur la face de la circonférence de la vitre de verre (10).

16. Vitre d'automobile selon la revendication 1, caractérisée en ce que la limite de la circonférence de la feuille intercalaire (12) s'aligne sensiblement sur celle de la vitre de verre (10) ou se trouve à l'intérieur de celle-ci, en ce que la feuille antilacération (14) s'arrête à une certaine distance de la limite de la circonférence de la feuille intercalaire (12), et en ce que cette dernière est en contact adhésif avec le joint de cadre (16).

Fig.1

Fig.2

Fig.3

Fig.4

Fig.5

Fig.6

Fig. 7

Fig. 8

Fig. 9

Fig. 10

Fig. 11

Fig. 12